(19) Europäisches Patentamt
European Patent Office
Office européen des brevets

(11) **EP 4 485 140 A1**

(12) **EUROPEAN PATENT APPLICATION**

(43) Date of publication:
**01.01.2025 Bulletin 2025/01**

(21) Application number: **24180674.4**

(22) Date of filing: **07.06.2024**

(51) International Patent Classification (IPC):
**G06F 1/3215** *(2019.01)*  **G06F 1/3234** *(2019.01)*
**G06F 1/3287** *(2019.01)*  **G06F 1/329** *(2019.01)*

(52) Cooperative Patent Classification (CPC):
**G06F 1/3284; G06F 1/3215; G06F 1/3234;
G06F 1/325; G06F 1/3287; G06F 1/329**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.06.2023 JP 2023105177
26.03.2024 JP 2024049185**

(71) Applicant: **FUJIFILM Business Innovation Corp.
Minato-ku
Tokyo (JP)**

(72) Inventors:
• **UDAGAWA, Koji
Ebina-shi, Kanagawa (JP)**
• **SAIKI, Takaki
Yokohama-shi, Kanagawa (JP)**

• **SHIKATA, Masahito
Yokohama-shi, Kanagawa (JP)**
• **NARUSHIMA, Kazuhiko
Yokohama-shi, Kanagawa (JP)**
• **HORIE, Hidenori
Yokohama-shi, Kanagawa (JP)**
• **MIKI, Masayoshi
Yokohama-shi, Kanagawa (JP)**
• **KONTANI, Yukio
Yokohama-shi, Kanagawa (JP)**
• **SUZUKI, Kazuya
Yokohama-shi, Kanagawa (JP)**
• **IDA, Shun
Yokohama-shi, Kanagawa (JP)**

(74) Representative: **Kurig, Thomas
Becker Kurig & Partner
Patentanwälte mbB
Bavariastraße 7
80336 München (DE)**

(54) **INFORMATION PROCESSING SYSTEM, PROGRAM, AND INFORMATION PROCESSING METHOD**

(57) An information processing system includes a processor configured to: output a set value of a shift time on the basis of a history of processes performed by an apparatus and a target value of a ratio of a specific process performed by the apparatus, the apparatus having multiple modes having different times elapsing until execution of a process is ready, the history including the count of processes performed in each of at least two modes among the modes, the shift time being a time until the apparatus is shifted to a mode, among the modes, in which a time until execution of a process is ready is longer than in another mode.

EP 4 485 140 A1

**Description**

Background

(i) Technical Field

The present disclosure relates to an information processing system, a program, and an information processing method.

(ii) Related Art

An apparatus having a power-saving function is known.

Japanese Unexamined Patent Application Publication (Translation of PCT Application) No. 2014-502929 describes a system supplying a timeout value of an apparatus such as a printer.

A known apparatus has multiple modes having different times elapsing until execution of a process is ready. The volume of processes performed by an apparatus and the time intervals of processes may be different depending on each period, such as each day or each week. Therefore, the power-saving effect may be reduced if the apparatus has a constant shift time elapsing until a shift to a mode, among the modes, in which a time until execution of a process is ready is longer than that in another mode.

Summary

Accordingly, it is an object of the present disclosure to provide suppression of reduction of the power-saving effect compared with the case in which an apparatus has a constant shift time elapsing until a shift to a mode, among multiple modes, in which a time until execution of a process is ready is longer than that in another mode.

According to a first aspect of the present disclosure, there is provided an information processing system comprising: a processor configured to: output a set value of a shift time on a basis of a history of processes performed by an apparatus and a target value of a ratio of a specific process performed by the apparatus, the apparatus having a plurality of modes having different times elapsing until execution of a process is ready, the history including a count of processes performed in each of at least two modes among the plurality of modes, the shift time being a time until the apparatus is shifted to a mode, among the plurality of modes, in which a time until execution of a process is ready is longer than in another mode.

According to a second aspect of the present disclosure, in the information processing system according to the first aspect, the history includes a ratio related to counts of processes performed in the respective at least two modes.

According to a third aspect of the present disclosure, in the information processing system according to the second aspect, the at least two modes include a first mode, a second mode, and a third mode. The first mode is a mode in which the apparatus waits for execution of a process. The second mode is a mode in which a time until execution of a process is ready is longer than in the first mode. The third mode is a mode in which a time until execution of a process is ready is longer than in the second mode. The history includes a ratio calculated by using a count of processes performed in the first mode, a count of processes performed in the second mode, and a count of processes performed in the third mode.

According to a fourth aspect of the present disclosure, in the information processing system according to the second aspect, the at least two modes include a first mode and a second mode. The first mode is a mode in which the apparatus waits for execution of a process. The second mode is a mode in which a time until execution of a process is ready is longer than in the first mode. The history includes a ratio calculated by using a count of processes performed in the first mode and a count of processes performed in the second mode.

According to a fifth aspect of the present disclosure, in the information processing system according to the second aspect, the at least two modes include a first mode, a second mode, and a third mode. The first mode is a mode in which the apparatus waits for execution of a process. The second mode is a mode in which a time until execution of a process is ready is longer than in the first mode. The third mode is a mode in which a time until execution of a process is ready is longer than in the second mode. The history includes a ratio calculated by using a count of processes performed in the second mode and a count of processes performed in the third mode.

According to a sixth aspect of the present disclosure, in the information processing system according to the second aspect, the history includes a ratio calculated by using a total count of processes and a count of processes performed at time intervals, each of the time intervals being within the shift time.

According to a seventh aspect of the present disclosure, in the information processing system according to the first aspect, the counts of processes performed in the respective at least two modes are counts, in the respective at least two modes, of operations on a user interface included in the apparatus.

According to an eighth aspect of the present disclosure, in the information processing system according to the seventh aspect, when a count of operations on the user interface is less than or equal to a threshold, the counts of processes performed in the respective at least two modes include counts of processes other than the operations on the user interface.

According to a ninth aspect of the present disclosure, in the information processing system according to the first aspect, the processor is configured to: by using a cumulative exponential distribution function, calculate the set value of the shift time from the history and the target value.

According to a tenth aspect of the present disclosure, in the information processing system according to the first aspect, the history includes a count of processes in each predetermined unit period. The processor is configured to: based on the history and the target value, the history including a count of processes during a first unit period, output the set value of the shift time for a next second unit period of the first unit period; and, when the count of processes during the first unit period is less than a threshold, output the set value of the shift time in the first unit period as the set value of the shift time in the second unit period.

According to an eleventh aspect of the present disclosure, in the information processing system according to the first aspect, the processor is configured to: based on a change of the set value of the shift time, estimate a change of an operating environment of the apparatus.

According to a twelfth aspect of the present disclosure, in the information processing system according to the first aspect, when a function is operating in the apparatus, the processor makes the target value lower compared with a case in which the function is not operating in the apparatus, the function being such that, in response to detection of a person around the apparatus, the mode of the apparatus is shifted from a long-waiting-time mode to a short-waiting-time mode, the long-waiting-time mode being a mode which is among the plurality of modes and in which a time until execution of a process is ready is longer than another mode.

According to a thirteen aspect of the present disclosure, in the information processing system according to the twelfth aspect, the target value is obtained through calculation of subtracting a predetermined value from the ratio. The predetermined value used when the function is operating in the apparatus is higher than the predetermined value used when the function is not operating in the apparatus.

According to a fourteenth aspect of the present disclosure, there is provided a program causing a computer to execute a process comprising: outputting a set value of a shift time on a basis of a history of processes performed by an apparatus and a target value of a ratio of a specific process performed by the apparatus, the apparatus having a plurality of modes having different times elapsing until execution of a process is ready, the history including a count of processes performed in each of at least two modes among the plurality of modes, the shift time being a time until the apparatus is shifted to a mode, among the plurality of modes, in which a time until execution of a process is ready is longer than in another mode.

According to a fifteenth aspect of the present disclosure, there is provided an information processing method causing a processor to execute a process comprising: outputting a set value of a shift time on a basis of a history of processes performed by an apparatus and a target value of a ratio of a specific process performed by the apparatus, the apparatus having a plurality of modes having different times elapsing until execution of a process is ready, the history including a count of processes performed in each of at least two modes among the plurality of modes, the shift time being a time until the apparatus is shifted to a mode, among the plurality of modes, in which a time until execution of a process is ready is longer than in another mode.

The first, second, third, fourth, fourteenth, and fifteenth aspects achieve suppression of reduction of the power-saving effect compared with the case in which an apparatus has a constant shift time elapsing until a shift to a mode, among multiple modes, in which a time until execution of a process is ready is longer than that in another mode.

The fifth aspect enables the set value of the shift time to be output without use of the count of processes performed in the first mode.

The sixth aspect enables the set value of the shift time to be output without counting execution of processes in each mode.

The seventh aspect enables the set value of the shift time to be output on the basis of a history of operations on the user interface.

The eighth aspect enables the set value of the shift time to be output even when the count of operations on the user interface is less than or equal to the threshold.

The ninth aspect enables the set value of the shift time to be calculated by using the cumulative exponential distribution function.

The tenth aspect enables shifting the mode to be controlled by using the same set value even when data about the count of processes, which is greater than or equal to the threshold, fails to be collected.

The eleventh aspect enables change of the operating environment of the apparatus to be estimated by using the set value of the shift time.

The twelfth and thirteenth aspects achieve improvement of the power-saving effect compared with the case in which the target value is not changed depending on whether the function is operating.

Brief Description of the Drawings

Exemplary embodiments of the present disclosure will be described in detail based on the following figures, wherein:

Fig. 1 is a block diagram illustrating the hardware configuration of an image forming apparatus according to an exemplary embodiment;
Fig. 2 is a diagram illustrating modes of an image forming apparatus;
Fig. 3 is a graph of the relationship between actual ratio and simplified ratio;
Fig. 4 is a graph of a cumulative exponential distribution;
Fig. 5 is a graph of the relationship between shift time and ratio;
Fig. 6 is a diagram illustrating results of a first concrete example;
Fig. 7 is a diagram illustrating results of a second concrete example;
Fig. 8 is a diagram illustrating results of a third concrete example;
Fig. 9 is a block diagram illustrating the hardware configuration of an image forming apparatus according to a second modified example; and
Fig. 10 is a diagram illustrating graphs of changes over time of a shift time and the like.

Detailed Description

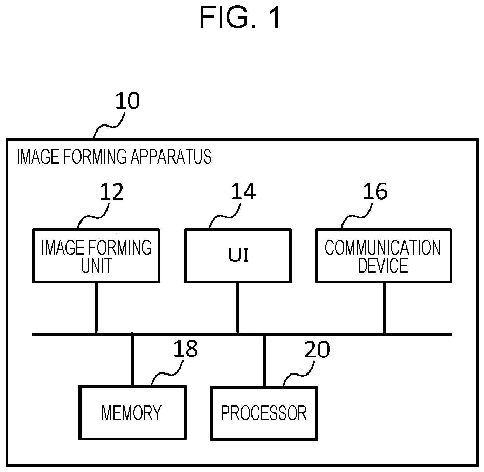

Referring to Fig. 1, an image forming apparatus 10 according to an exemplary embodiment will be described. Fig. 1 is a block diagram illustrating the hardware configuration of the image forming apparatus 10 according to the exemplary embodiment.

The image forming apparatus 10 includes an image forming unit 12, a user interface (UI) 14, a communication device 16, a memory 18, and a processor 20. The image forming apparatus 10 is a printer, a scanner, a copier, a facsimile, or a multifunction device (for example, a device having functions of multiple devices, such as a printer, a scanner, and a copier).

The image forming unit 12 has at least one function among a print function, a scan function, a copy function, and a facsimile function. The system of printing, the system of scanning, and the like of the image forming unit 12 are not particularly limited. For example, an electrophotographic system, an inkjet system, a thermography system, or a thermal transfer system is used as the system of printing.

The UI 14, which is a user interface, includes a display and an input device. The display is, for example, a liquid-crystal display or an electroluminescence (EL) display. The input device is, for example, a keyboard, a mouse, and input keys, or an operation panel. The UI 14 may be a UI such as a touch panel (for example, an operation panel) serving as a display and an input device.

The communication device 16 includes one or more communication interfaces each having a communication chip, a communication circuit, or the like. The communication device 16 has a function of transmitting information to other apparatuses and a function of receiving information from other apparatuses. The communication device 16 may have a wireless communication function, such as Near Field Communication or Wi-Fi™, or may have a wired communication function.

The memory 18 is a device including one or more storage areas in which data is stored. The memory 18 is, for example, a hard disk drive (HDD), a solid-state drive (SSD), various types of memory (for example, a random-access memory (RAM), a dynamic random access memory (DRAM), a nonvolatile random access memory (NVRAM), and a read-only memory (ROM)), other types of storage device (for example, an optical disk), or a combination of these.

The processor 20 controls operations of the units of the image forming apparatus 10.

The image forming apparatus 10 has multiple modes having different times elapsing until execution of a process is ready. The time until execution of a process is ready may be a time for which a user waits for execution of the process. Thus, the time may be a waiting time for the user.

For example, the modes include ready mode and power-saving mode. The power-saving mode is a mode in which the time (that is, the waiting time) until execution of a process is ready is longer than that in the ready mode. The power-saving mode may include multiple modes having different times elapsing until execution of a process is ready.

The ready mode is a mode in which the image forming apparatus 10 waits for execution of a process. The ready mode is a mode, in which power is supplied to the image forming apparatus 10 having warmed up and the image forming apparatus 10 is ready to perform a process, but is a mode in which the image forming apparatus 10 is not performing a process. Examples of a process include a print job, a scan job, a copy job, a job of transferring, to an external apparatus, image data generated through scanning, and a job of storing, in the image forming apparatus 10, image data generated through scanning. As a matter of course, these processes are merely examples. A process other than these processes may be performed by the image forming apparatus 10. A process performed by a user who operates the UI 14 may be a process according to the exemplary embodiment.

The power-saving mode is a mode in which some components of the image forming apparatus 10 are not supplied with power, or a mode in which some or all components in the image forming apparatus 10 are supplied with power lower than that in the ready mode. The power consumed in the power-saving mode is lower than that in the ready mode.

In the description below, the time until the mode of the image forming apparatus 10 is shifted from the ready mode to the power-saving mode is referred to as a "shift time". The set value of the shift time is stored in the memory 18. The processor 20 shifts the mode of the image forming apparatus 10 from the ready mode to the power-saving mode in accordance with the shift time.

For example, assume the case in which the image forming apparatus 10 is in the ready mode. In this case, when the shift time elapses from the time point at which the image forming apparatus 10 has performed a process last (for example, the time point at which the process has been completed), or from the time point at which the image forming apparatus 10 has been operated by a user last, the processor 20 shifts the mode of the image forming apparatus 10 from the ready mode to the power-saving mode. That is, when the time for which the image forming apparatus 10 does not perform a process such as a job or the time for which the UI 14 is not operated by a user is longer than or equal to the shift time, the processor 20 shifts the mode of the image forming apparatus 10 from the ready mode to the power-saving mode.

In the case where the image forming apparatus 10 is in the ready mode, when a user gives an instruction of a shift to the power-saving mode (for example, when a power-saving button disposed on the image forming apparatus 10 is pressed), the processor 20 may shift the mode of the image forming apparatus 10 from the ready mode to the power-saving mode.

In the case where the image forming apparatus 10 is in the power-saving mode, when a specific event occurs, the processor 20 shifts the mode of the image forming apparatus 10 from the power-saving mode to the ready mode. Thus, the image forming apparatus 10 returns to the ready mode.

The specific event is an event corresponding to an instruction to return to the ready mode. Examples of a specific event include an operation on the UI 14, reception of a job, reception of an instruction to perform a job, and pressing of a wake-up button. These are merely exemplary specific events. An event other than these may be defined as a specific event.

For example, when the UI 14 is operated by a user, the processor 20 shifts the mode of the image forming apparatus 10 from the power-saving mode to the ready mode.

When the image forming apparatus 10 receives an instruction to perform a process, the processor 20 may shift the mode of the image forming apparatus 10 from the power-saving mode to the ready mode. For example, when a print job is transmitted from an external apparatus to the image forming apparatus 10 and the processor 20 receives the print job, the processor 20 determines that a specific event has occurred, and shifts the mode of the image forming apparatus 10 from the power-saving mode to the ready mode. The processor 20 controls the image forming unit 12 in accordance with the received print job to perform the print job.

When a wake-up button, which is disposed on an operation panel or the like of the image forming apparatus 10, is pressed, the processor 20 may shift the mode of the image forming apparatus 10 from the power-saving mode to the ready mode.

When the power-saving mode includes multiple different modes, a shift time is set for each mode, and the set value of each shift time is stored in the memory 18.

For example, the power-saving mode includes Low Power mode (hereinafter referred to as "LP mode") and Sleep mode (hereinafter referred to as "SP mode").

The LP mode is a mode in which the time (that is, the waiting time) until execution of a process is ready is longer than that in the ready mode. The SP mode is a mode in which the time (that is, the waiting time) until execution of a process is ready is longer than that in the LP mode. The power consumed in the SP mode is lower than that in the LP mode. That is, the SP mode is a mode achieving a power-saving effect higher than that in the LP mode. The ready mode corresponds to an exemplary first mode. The LP mode corresponds to an exemplary second mode. The SP mode corresponds to an exemplary third mode.

In the ready mode, the units of the image forming apparatus 10 are supplied with power. For example, the image forming unit 12, the UI 14, the communication device 16, the memory 18, and the processor 20 are supplied with power. The image forming apparatus 10 is ready to perform a process such as a print job.

In the LP mode, the units of the image forming apparatus 10 are supplied with power lower than that in the ready mode. For example, in the LP mode, the scanner included in the image forming unit 12 and the operation panel included in the UI 14 are not supplied with power, or are supplied with power lower than that in the ready mode. For example, when the operation panel includes a backlight, the backlight is switched off. In the LP mode, the memory 18 and the processor 20 are supplied with power.

In the SP mode, the units of the image forming apparatus 10 are supplied with power lower than that in the LP mode. For example, in the SP mode, the image forming unit 12 and the UI 14 are not supplied with power, or are supplied with power lower than that in the LP mode. The power supplied to the memory 18 and the processor 20 may be lower than that in the LP mode.

The forms of power supply in the ready mode, the LP mode, and the SP mode, which are described above, are merely exemplary. Alternatively, forms of power supply other than those described above may be performed. The forms of power supply in the modes may be set by a user.

For example, the processor 20 changes the mode of the image forming apparatus 10 in the order of the ready mode, the LP mode, and the SP mode.

The set value of a first shift time (hereinafter referred to as an "LP shift time") until the mode of the image forming apparatus 10 is shifted from the ready mode to the LP mode is stored in the memory 18, and the LP shift time is set to the image forming apparatus 10. The LP shift time is a time from the time point of start of the ready mode to the time point of start of the LP mode.

The set value of a second shift time (hereinafter referred to as an "SP shift time") until the mode of the image forming apparatus 10 is shifted from the ready mode to the SP mode is stored in the memory 18, and the SP shift time is set to the image forming apparatus 10. The SP shift time is a time from the time point of start of the ready mode to the time point of start of the SP mode. The SP shift time is set to the same time as the LP shift time or a time longer than the LP shift time. Thus, in many cases, the mode of the image forming apparatus 10 is shifted in the order of the ready mode, the LP mode, and the SP mode. When the SP shift time is the same as the LP shift time, the mode of the image forming apparatus 10 is shifted from the ready mode, not to the LP mode, but to the SP mode. The SP shift time may be a time from the time point of start of the LP mode to the time point of start of the SP mode.

In the case where the image forming apparatus 10 is in the ready mode, when the time for which the image forming apparatus 10 does not perform a job or the time for which the UI 14 is not operated by a user is longer than or equal to the LP shift time, the processor 20 shifts the mode of the image forming apparatus 10 from the ready mode to the LP mode. That is, when the LP shift time elapses from the time point at which a process or an operation has been performed last, the processor 20 shifts the mode of the image forming apparatus 10 from the ready mode to the LP mode. In the case where the image forming apparatus 10 is in the LP mode, when a specific event which causes a return to the ready mode occurs, the processor 20 shifts the mode of the image forming apparatus 10 from the LP mode to the ready mode.

Even when the time for which the image forming apparatus 10 does not perform a process or the time for which the UI 14 is not operated by a user is shorter than the LP shift time, the processor 20 may shift the mode of the image forming apparatus 10 from the ready mode to the LP mode. For example, when the image forming apparatus 10 is in the LP mode and the processor 20 receives a print job from an external apparatus, the processor 20 shifts the mode of the image forming apparatus 10 from the LP mode to the ready mode to perform the print job. Without waiting until the LP shift time elapses after completion of the print job, the processor 20 may return the mode of the image forming apparatus 10 to the power-saving mode (LP mode) which is the mode at the time point when the processor 20 has received the print job. That is, in the case where the image forming apparatus 10 is in the LP mode, when the processor 20 receives a print job, the mode of the image forming apparatus 10 is returned to the LP mode quickly after completion of the print job.

In the case where the image forming apparatus 10 is in the LP mode, when the time for which the image forming apparatus 10 does not perform a process or the time for which the UI 14 is not operated by a user is longer than or equal to the SP shift time, the processor 20 shifts the mode of the image forming apparatus 10 from the LP mode to the SP mode. That is, when the SP shift time elapses from the time point at which a process or an operation has been performed last, the processor 20 shifts the mode of the image forming apparatus 10 from the LP mode to the SP mode. In the case where the image forming apparatus 10 is in the SP mode, when a specific event which causes a return to the ready mode occurs, the processor 20 shifts the mode of the image forming apparatus 10 from the SP mode to the ready mode.

Even when the time for which the image forming apparatus 10 does not perform a process or the time for which the UI 14 is not operated by a user is shorter than the SP shift time, the processor 20 may shift the mode of the image forming apparatus 10 from the ready mode to the SP mode. For example, in the case where the image forming apparatus 10 is in the SP mode, when the processor 20 receives a print job from an external apparatus, the processor 20 shifts the mode of the image forming apparatus 10 from the SP mode to the ready mode to perform the print job. Without waiting until the SP shift time elapses after completion of the print job, the processor 20 may return the mode of the image forming apparatus 10 to the power-saving mode (SP mode) which is the mode at the time point when the processor 20 has received the print job. That is, in the case where the image forming apparatus 10 is in the SP mode, when the processor 20 receives a print job, the mode of the image forming apparatus 10 is returned to the SP mode quickly after completion of the print job.

The time (that is, the waiting time) required for a shift from the power-saving mode to the ready mode is different depending on the type of the power-saving mode. Power supplied in the SP mode is lower than that in the LP mode. Therefore, the time required for a shift from the SP mode to the ready mode is longer than that from the LP mode to the ready mode.

The LP mode and the SP mode are merely exemplary power-saving modes. The image forming apparatus 10 may have three or more different power-saving modes. As a matter of course, the power-saving mode may be a single mode.

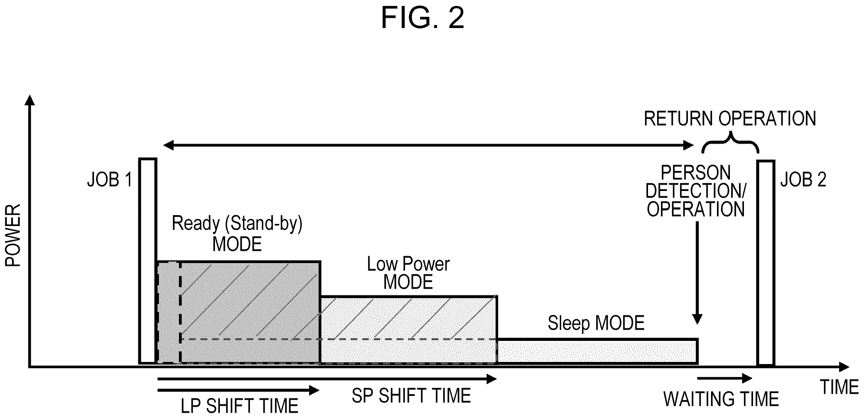

Fig. 2 illustrates power levels consumed in the ready mode, the LP mode, and the SP mode. In Fig. 2, the horizontal axis represents time; the vertical axis represents power consumption. In this example, jobs, which serve as processes, are performed.

For example, when the image forming apparatus 10 performs Job 1 (for example, a print job) and the execution of Job 1 completes, the mode of the image forming apparatus 10 is shifted to the ready mode. When the LP shift time elapses from the time point of completion of Job 1 without execution of any job or operation, the processor 20 shifts the mode of the image forming apparatus 10 from the ready mode to the LP mode. Further, when the SP shift time elapses from the time point of completion of Job 1 without execution of a job or operation, the processor 20 shifts the mode of the image forming apparatus 10 from the LP mode to the SP mode.

In the case where the image forming apparatus 10 is in the SP mode, when a specific event which causes a return to the ready mode occurs (for example, when the UI 14 is operated or the processor 20 receives a job), the processor 20 shifts the mode of the image forming apparatus 10 from the SP mode to the ready mode. When the processor 20 receives a job (for example, Job 2), the processor 20 performs Job 2 which has been received. The time from the time point of completion of the SP mode to the time point of start of execution of Job 2 corresponds to the waiting time for the SP mode.

In the case where the image forming apparatus 10 is in the LP mode, when a specific event which causes a return to the ready mode occurs, the processor 20 shifts the mode of the image forming apparatus 10 from the LP mode to the ready mode. The time from the time point of completion of the LP mode to the time point of start of execution of a job corresponds to the waiting time for the LP mode.

For example, the waiting time for the SP mode is three seconds; the waiting time for the LP mode is one second or less. In the case where the image forming apparatus 10 is in the ready mode, the time required until execution of a job (that is, the time corresponding to the waiting time for the ready mode) is one second or less. These times are merely exemplary, and may change, for example, depending on the type, function, or performance of the image forming apparatus 10.

Typically, as a shift time, such as the LP shift time or the SP shift time, is longer, the time until the mode of the image forming apparatus 10 is shifted to the LP mode or the SP mode is longer, resulting in improvement of user convenience. In contrast, this creates a larger standby power consumption, resulting in degradation of power saving. Conversely, a shorter shift time causes improvement of power saving but causes reduction of user convenience. A user may set a shift time in accordance with the utilization of the image forming apparatus 10 (for example, the frequency of execution of jobs). However, such setting by a user is difficult to achieve both improvement of convenience and improvement of power saving.

In the exemplary embodiment, the processor 20 manages a history (hereinafter referred to as a "process history") including the count of processes performed in each of at least two modes. Information indicating the process history is stored in the memory 18. On the basis of the process history and the target value of the ratio of specific processes performed by the image forming apparatus 10, the processor 20 outputs a set value of a shift time elapsing until the image forming apparatus 10 is shifted to a mode in which a time until execution of a process is ready is longer than that in another mode. For example, the set value is stored in the memory 18. In accordance with the set value, the processor 20 shifts the mode of the image forming apparatus 10 to the mode in which the time until execution of a process is ready is longer than that in another mode. The set value of a shift time may be a set value of the SP shift time, may be a set value of the LP shift time, or may be set values of both the SP shift time and the LP shift time. For example, the target value of the ratio of specific processes corresponds to convenience of users of the image forming apparatus 10. For example, the convenience is evaluated in view of whether the image forming apparatus 10 is allowed to be used with a shorter waiting time. The target value of the ratio of specific processes is a target value corresponding to the ratio of the count of processes which is described below.

The count of processes may be the count of processes performed through operations on the UI 14, may be the count of execution of print jobs requested remotely over a network or the like, or may be the total of the count of processes performed through operations on the UI 14 and the count of execution of print jobs and the like requested remotely.

For example, the process history includes the count of processes performed in a predetermined period.

In the description below, the count of processes performed in the ready mode is referred to as "R"; the count of processes performed in the LP mode is referred to as "LP"; the count of processes performed in the SP mode is referred to as "SP".

For example, the process history may include the count of processes performed in all the modes. That is, the process history in this case includes the total of the count of processes performed in the ready mode, the count of processes performed in the LP mode, and the count of processes performed in the SP mode. Hereinafter, the total is referred to as the total process count:

$$\text{total process count} = R + LP + SP.$$

The process history may include the total of the counts of processes performed in the power-saving mode. That is, the process history in this case includes the total of the count of processes performed in the LP mode and the count of processes performed in the SP mode. Hereinafter, the total is referred to as the process count in the power-saving mode:

$$\text{process count in power-saving mode} = LP + S.$$

The predetermined period may be defined by a user. Examples of the predetermined period include a period in hours, a period in days, a period in weeks, a period in months, and any other periods.

If the count of operations on the UI 14 in the period is less than or equal to a predetermined count, the history may include the count of execution of jobs, such as a print job and a copy job, or the total of the counts.

For example, the processor 20 counts processes performed in at least two modes among the ready mode, the LP mode, and the SP mode, and stores, in the memory 18, information indicating the count of processes performed in each mode (that is, information indicating the process history).

The count of processes performed in the ready mode is the count of processes performed when the image forming apparatus 10 is in the ready mode.

The count of processes performed in the LP mode is the count of processes performed when the image forming apparatus 10 is in the LP mode. In other words, the count of processes performed in the LP mode is the count of occurrence of specific events when the image forming apparatus 10 is in the LP mode. For example, the count of processes performed in the LP mode includes the following counts in the image forming apparatus 10 which is in the LP mode: the count of shifts of the mode of the image forming apparatus 10 from the LP mode to the ready mode due to operations on the UI 14; the count of shifts of the mode of the image forming apparatus 10 from the LP mode to the ready mode due to the processor 20's reception of jobs.

The count of processes performed in the SP mode is the count of processes performed when the image forming apparatus 10 is in the SP mode. In other words, the count of processes performed in the SP mode is the count of occurrence of specific events when the image forming apparatus 10 is in the SP mode. For example, the count of processes performed in the SP mode includes the following counts in the image forming apparatus 10 which is in the SP mode: the count of shifts of the mode of the image forming apparatus 10 from the SP mode to the ready mode due to operations on the UI 14; the count of shifts of the mode of the image forming apparatus 10 from the SP mode to the ready mode due to the processor 20's reception of jobs.

The target value may be predetermined, may be determined by a user, or may be calculated through learning for calculating the target value.

The set value which is output may be a set value of the LP shift time, may be a set value of the SP shift time, or may be values of both the LP shift time and the SP shift time.

When the set value which is output is a set value of the LP shift time, the processor 20 shifts the mode of the image forming apparatus 10 from the ready mode to the LP mode in accordance with the set value which is output. When the set value which is output is a set value of the SP shift time, the processor 20 shifts the mode of the image forming apparatus 10 from the LP mode to the SP mode in accordance with the set value which is output.

When only either one of the LP mode and the SP mode is set as the power-saving mode, the set value which is output is a set value of the shift time in the mode which is set as the power-saving mode. In this case, the processor 20 shifts the mode of the image forming apparatus 10 from the ready mode to the set mode in accordance with the set value.

For example, the process history includes the ratio related to the counts of processes performed in the respective at least two modes. Exemplary ratios are the following:

$$\text{first ratio: } (R + LP)/(R + LP + SP),$$

$$\text{second ratio: } LP/(LP + SP),$$

where, as described above, R, LP, and SP represent the count of processes performed in the ready mode, the count of processes performed in the LP mode, and the count of processes performed in the SP mode, respectively.

The first and second ratios described above correspond to values indicating convenience of users of the image forming apparatus 10. Specifically, each of the first and second ratios is the ratio of the count of processes for which the waiting time is less than or equal to a threshold. For example, the threshold is one second. The threshold is merely exemplary, and is determined, for example, depending on the type, function, or performance of the image forming apparatus 10. For example, since each of the waiting time for the ready mode and the waiting time for the LP mode is one second or less, the threshold is set to one second. If these waiting times change, the threshold is set in accordance with the change. When the threshold is set to one second, each of the first and second ratios corresponds to the ratio of processes performed after a waiting time which is one second or less. The higher the first ratio is, the larger the count of processes performed after a waiting time which is one second or less. This may indicate higher user convenience in view of earlier execution of jobs. The same is true for the second ratio. Therefore, the first and second ratios represent user convenience.

The first ratio is the ratio of the count of processes, for which the waiting time is less than or equal to the threshold, with respect to the count of processes performed in all the modes. The count of processes performed in all the modes is the total of the count of processes performed in the ready mode, the count of processes performed in the LP mode, and the count of processes performed in the SP mode. The count of processes, for which the waiting time is less than or equal to the threshold, is the total of the count of processes performed in the ready mode and the count of processes performed in the LP mode.

The second ratio is a ratio calculated without using the count of processes performed in the ready mode, and is a ratio obtained by simplifying the first ratio. The second ratio may be a simplified ratio. The processes performed in the LP mode are counted by counting returns of the mode of the image forming apparatus 10 from the LP mode to the ready mode. Processes performed in the SP mode are counted by counting returns of the mode of the image forming apparatus 10 from the SP mode to the ready mode. In contrast, for the ready mode, processes performed in the ready mode are counted by counting, not returns, but processes actually performed in the ready mode. For example, when processes (for example, print jobs) are performed continuously in the ready mode, a shift between modes does not occur. Thus, it may be difficult to accurately count jobs performed continuously. That is, it may not be obvious whether the count of processes which are continuously performed is one, or more than one. Use of the second ratio eliminates necessity of counting processes performed in the ready mode.

A user may select, from the first and second ratios, a ratio to be used, or a ratio to be used may be predetermined.

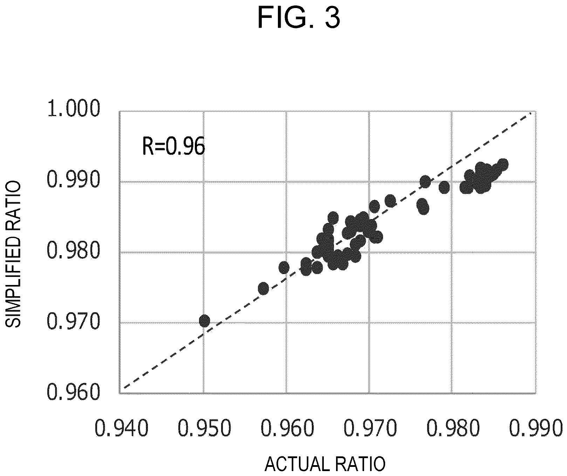

Referring to Fig. 3, the relationship between the first ratio and the second ratio will be described. Fig. 3 illustrates a graph of the relationship between the first ratio and the second ratio. The horizontal axis represents the first ratio which is an actual ratio. The vertical axis represents the second ratio which is a simplified ratio. As illustrated in Fig. 3, there is a correlation between the first ratio and the second ratio. Thus, instead of calculation of the first ratio, calculation of the second ratio enables the ratio of the count of processes, for which the waiting time is less than or equal to the threshold, to be calculated.

For example, the processor 20 uses a cumulative exponential distribution function to calculate a set value of a shift time from the process history and the target value.

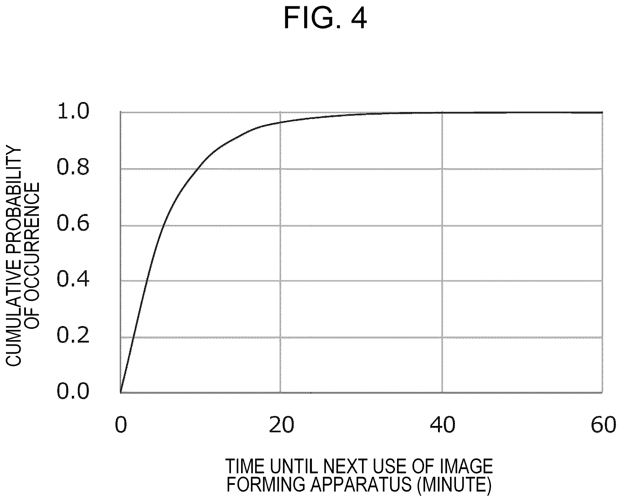

Referring to Fig. 4, the cumulative exponential distribution function will be described.

Fig. 4 illustrates an exemplary cumulative exponential distribution function. The horizontal axis represents time (minute) elapsing until next use of the image forming apparatus 10; the vertical axis represents cumulative probability f(t) of occurrence.

The cumulative probability f(t) of occurrence is a probability that events occur, in a unit time, λ times in average, and is expressed in Expression (1):

$$f(t) = 1 - e^{\wedge}(-\lambda t) \qquad (1),$$

where t represents time.

The time until next use of the image forming apparatus 10 corresponds to a shift time (for example, the SP shift time). The cumulative probability of occurrence corresponds to the probability that the image forming apparatus 10 is allowed to be used without a shift of the image forming apparatus 10 to the SP mode. Specifically, the cumulative probability of occurrence corresponds to a ratio described above (for example, the first ratio or the second ratio).

The distribution obtained when the image forming apparatus 10 is actually used (for example, the relationship between the SP shift time and ratio) does not match an ideal cumulative exponential distribution. However, the actual distribution is close to the ideal cumulative exponential distribution. In the exemplary embodiment, for example, the processor 20 estimates a cumulative exponential distribution function through learning such as machine learning, and uses the estimated cumulative exponential distribution function to calculate a set value of a shift time.

The processor 20 estimates a cumulative exponential function on the basis of the process history in a learning period, and calculates a set value of a shift time. The learning period, which is a predetermined period, is, for example, a period in hours (for example, one hour or two hours), a period in days (for example, one day or two days), a period in weeks (for example, one week or two weeks), or a period in months (for example, one month or two months). In accordance with the calculated shift time, the processor 20 controls shifting the mode of the image forming apparatus 10. After the learning period, the processor 20 learns a cumulative exponential function for each unit control period to update the set value of the shift time. The unit control period, which is a predetermined period, is, for example, a period in hours (for example, one hour or two hours), a period in days (for example, one day or two days), a period in weeks (for example, one week or two weeks), or a period in months (for example, one month or two months).

The processor 20 counts processes performed in each of the ready mode, the LP mode, and the SP mode in the learning period. For example, for the LP mode and the SP mode, the processor 20 counts shifts from the LP mode to the ready mode (that is, returns from the LP mode) in the learning period, and counts shifts from the SP mode to the ready mode (that is, returns from the SP mode) in the learning period. The count of processes is not limited to the count of execution of jobs, and the count of operations on the UI 14 may be included in the count of processes. That is, the count of mode shifts to the ready mode due to operations on the UI 14 may be included in the count of processes.

For example, on the basis of the counts of processes performed in the learning period, the processor 20 calculates the first ratio (= (R + LP)/(R + LP + SP)). The processor 20 may calculate the second ratio (= LP/(LP + SP)) which is a simplified ratio. In the case of use of the second ratio, processes performed in the ready mode are not necessarily counted. In this example, the first ratio is used.

To avoid impossibility of calculating a cumulative index, extreme values may be used. For example, when the first ratio exceeds 0.99 (that is, when the first ratio exceeds 99%), the processor 20 may use 0.99 (that is, 99%) as the first ratio. When the first ratio is less than 0.01 (that is, when the first ratio is less than 1%), the processor 20 may use 0.01 (that is, 1%) as the first ratio.

The processor 20 sets the target value. For example, as given by Expression (2), the processor 20 sets, to the target value, a value obtained by subtracting a predetermined value from the first ratio obtained in the learning period. For example, the predetermined value, which may be set by a user, is 0.1 (that is, 10%):

$$\text{target value} = \text{first ratio in learning period} - 0.1 \quad (2).$$

As described above, the first ratio represents user convenience. Thus, subtraction of the predetermined value (for example, 0.1) from the ratio in the learning period means that the convenience is reduced by that value.

When the target value is less than 0.01 (that is, in the case of less than 1%), the processor 20 sets 0.01 (that is, 1%) to the target value.

For example, when the first ratio is 13%, the target value is 3%. When the first ratio is 12%, the target value is 2%. When the first ratio is 11%, the target value is 1%. When the first ratio is 10%, the target value is 1%. When the first ratio is 9%, the target value is 1%.

Through use of a cumulative exponential distribution function, a ratio (for example, the first ratio or the second ratio) is given by Expression (3):

$$\text{ratio} = 1 - e^{\wedge}(-\lambda \times \text{set value of SP shift time}) \quad (3).$$

$\lambda$ represents the average count of occurrence of events in a unit time, and is calculated by dividing the count (the total process count = R + LP + SP) of processes, which are performed in the latest period (for example, the latest week), by its corresponding use time (for example, a value obtained by converting the use time in the latest week to hour units).

The use time may be calculated by predetermining a use time (for example, eight hours per day) per average day and multiplying the predetermined use time by the number of days of use, or may be calculated, for example, from the power supply time of the image forming apparatus 10.

Expression (4) described below is obtained from transformation of Expression (3). Thus, the set value of the SP shift time in the latest period (for example, the latest week) and the ratio in that period (for example, the first ratio) are substituted into Expression (4) to calculate $\lambda$:

$$\lambda = \log_e(1 - \text{ratio})/(\text{set value of SP shift time}) \quad (4).$$

The process count (LP + SP) in the power-saving mode may be used as the count of processes performed in the latest period (for example, the latest week).

Expression (5) is obtained through transformation of Expression (3):

$$\text{set value of SP shift time} = -\log_e(1 - \text{ratio})/\lambda \quad (5).$$

On the basis of Expression (5), the processor 20 calculates the set value of the SP shift time for setting the first ratio in the next week to the target value (that is, the first ratio in the learning period - 0.1). Expression (6) described below is an expression to calculate the set value:

$$\text{set value of SP shift time in next week} = -\log_e(1 - \text{target value})/\lambda \quad (6).$$

The processor 20 rounds off, to the nearest integer, the set value of the SP shift time in the next week.

The processor 20 may compensate the set value of the SP shift time in the next week, which is obtained by using Expression (6).

When the initial value of the SP shift time < the set value of the SP shift time in the next week, the processor 20 replaces the set value of the SP shift time in the next week by the initial value, and continues automatic control. In the case of the initial value of 60, when this condition is satisfied, the set value of the SP shift time in the next week is set to 60.

When the set value of the SP shift time in the next week is below the lower limit settable for the SP shift time, the processor 20 replaces the set value of the SP shift time in the next week by the lower limit, and continues the automatic control. For example, the lower limit settable for the SP shift time is one. When the set value of the SP shift time in the next week is zero, that is, when the set value before the round-off is less than, for example, 0.5, this condition is satisfied. In this case, the set value of the SP shift time in the next week is set to one.

When $1 \leq$ the set value of the SP shift time in the next week $\leq$ the initial value, the processor 20 controls the image forming apparatus 10 in accordance with the calculated set value of the SP shift time in the next week.

When the count (for example, the total of the count of processes performed in the ready mode, the count of processes performed in the LP mode, and the count of processes performed in the SP mode) of processes in a first unit control period (for example, this week) is less than a threshold, the processor 20 may determine that the first unit control period is an invalid period. For example, the threshold is 25. The threshold may be set by a user. For example, in the case where the first unit control period is a single week, when the count in the single week is less than 25, the processor 20 determines that the period is an invalid period. For example, when it is determined that a unit control period is an invalid period, the processor 20 may use the set value in this week as the set value in the next week. For example, when the count of processes is less than the threshold, it is assumed that the way of using the image forming apparatus 10 is changed, for example, due to consecutive holidays or a long vacation.

Thus, when the count of processes in the first unit control period (for example, this week) is less than the threshold (for example, 25), the processor 20 outputs the set value of the shift time in the first unit control period as the set value of the shift time in the second unit control period (for example, the next week). That is, the processor 20 sets the set value of the shift time for this week to the set value of the shift time for the next week.

A concrete example of learning and control after the learning will be described below. A concrete example of learning will be described first and a concrete example of automatic control of modes using the learning result will be then described. Values described below are merely exemplary. The values may be changed, for example, in accordance with the operating environment of the image forming apparatus 10, user circumstances, and the functions of the image forming apparatus 10.

Learning Step

Step S01: At a Start

The processor 20 counts processes performed in each of the ready mode, the LP mode, and the SP mode during a learning period (that is, the counts of returns to the ready mode). The count of processes includes, not only the count of execution of jobs, but also the count of operations on the UI 14. For example, as a rule, a learning period is one week. Exceptionally, a learning period is extended on a week-by-week basis.

An initial set value is used as the SP shift time in the learning period. The initial set value may be used as the LP shift time in the learning period. Alternatively, when influence of the LP shift time on convenience is small, the shortest time which is settable may be used as the LP shift time in the learning period. For example, the time required until execution of a job in the ready mode (that is, the time corresponding to the waiting time in the ready mode) is less than or equal to one second. The waiting time in the SP mode is three seconds. The waiting time in the LP mode is less than or equal to one second. That is, the waiting time in the LP mode is less than or equal to one second, which is equivalent to that in the ready mode. Thus, in this example, the shortest time, one, is used as the LP shift time in learning.

Step S02: After One Week

According to the determination criteria described below, the processor 20 determines whether the process count in the first learning period (that is, the first week) is valid:

{ count of processes performed in ready mode + count of processes performed in LP mode (that is, count of returns from LP mode) + count of processes performed in SP mode (that is, count of returns from SP mode)} $\geq$ 25: valid,
{ count of processes performed in ready mode + count of processes performed in LP mode (that is, count of returns from LP mode) + count of processes performed in SP mode (that is, count of returns from SP mode)} < 25: invalid.

If the process count is valid, the processor 20 stores, as a first-week actual value, the count of processes preformed in the ready mode, the count of returns from the LP mode, and the count of returns from the SP mode in the memory 18.

If the count is invalid, the processor 20 discards the counts obtained in the learning period, and extends the learning period to the next week. If the process count is less than the threshold (for example, 25), it is assumed that the way of using the image forming apparatus 10 has been changed, for example, due to consecutive holidays or a long vacation. In this case, to avoid reflection of the influence on the next week, the counts are discarded and the learning period is extended to the next week.

Step S03: After Two Weeks

According to the same determination criteria as those in step S02, the processor 20 determines whether the process count obtained in the next learning period (that is, the second week) is valid.

If the process count is valid, when the first-week actual value is stored in the memory 18, the processor 20 stores a second-week actual value (that is, the count of processes preformed in the ready mode, the count of returns from the LP mode, and the count of returns from the SP mode, which are obtained in the second week) in the memory 18. The processor 20 ends the learning, and sets the target value. The process proceeds, not to step S04, but to step S05.

If the process count is valid, when the first-week actual value is not stored in the memory 18, the second-week actual value is stored in the memory 18 as the first-week actual value. The processor 20 extends the learning period to the next week, and continues the learning. The process proceeds to step S04.

If the process count is invalid, the processor 20 discards the counts obtained in the second week, extends the learning period to the next week, and continues the learning. The process proceeds to step S04.

Step S04: After Another Week

According to the same determination criteria as those in step S02, the processor 20 determines whether the process count obtained in another next learning period (that is, the third week) is valid.

If the process count is valid, when the first-week actual value is stored in the memory 18, the processor 20 stores, as the second-week actual value, a third-week actual value (that is, the count of processes performed in the ready mode, the count of returns from the LP mode, and the count of returns from the SP mode, which are obtained in the third week) in the memory 18. The processor 20 ends the learning, and sets the target value. The process proceeds to step S05.

If the process count is valid, when a first-week actual value is not stored in the memory 18, the third-week actual value is stored as the first-week actual value in the memory 18. The processor 20 extends the learning period to the next week, and continues the learning. For example, the processor 20 performs the same process in step S04 on the basis of the counts obtained in the next week.

If the process count is invalid, the processor 20 discards the counts obtained in the week, extends the learning period to the next week, and continues the learning.

The processor 20 may repeatedly perform the process in step S04.

Step S05: Setting the Target Value

The processor 20 calculates the first ratio, (R + LP)/(R + LP + SP). The counts of processes performed in the ready mode, which are included in the first-week actual value and the second-week actual value, are used as R. The counts of returns from the LP mode, which are included in the first-week actual value and the second-week actual value, are used as LP. The counts of returns from the SP mode, which are included in the first-week actual value and the second-week actual value, are used as SP. The count of processes performed in the ready mode, which is included in the first-week actual value or the second-week actual value, may be used as R. The count of returns from the LP mode, which is included in the first-week actual value or the second-week actual value, may be used as LP. The count of returns from the SP mode, which is included in the first-week actual value or the second-week actual value, may be used as SP.

For example, if the first ratio exceeds 0.99 (that is, 99%), the processor 20 may use 0.99 as the first ratio. If the first ratio is less than 0.01 (that is, 1%), the processor 20 may use 0.01 as the first ratio.

Then, the processor 20 calculates the target value according to Expression (2) described above. In this case, when the calculated target value is less than the lower limit (for example, 0.01), the processor 20 sets the lower limit to the target value.

Automatic Control Step

Step S 11: At a Start

After the target value is calculated in the learning step, the processor 20 then calculates the set value of a shift time. In this example, the processor 20 calculates the set value of the SP shift time. As a matter of course, the processor 20 may calculate the set values of both the LP shift time and the SP shift time, or may calculate only the set value of the LP shift time.

(1) Calculate λ of the Cumulative Exponential Distribution Function

According to Expression (7) described below, the processor 20 calculates λ of the cumulative exponential distribution function:

λ = total process count (R + LP + SP) in learning period (two weeks)/use time in learning period (7).

The use time in the learning period may be calculated by predetermining, for example, an average-use time (for example, eight hours per day) and multiplying the average-use time by the number of days of use, or may be calculated, for example, from the power supply time of the image forming apparatus 10. In this example, the set value of the SP shift time in the learning period is the initial set value of the SP shift time.

(2) Calculate the Set Value of the SP Shift Time

Then, the processor 20 substitutes λ, which is calculated by using Expression (7) described above, and the target value into Expression (8) described below to calculate the set value of the SP shift time:

$$\text{set value of SP shift time} = -\log_e(1 - \text{target value})/\lambda \ (8).$$

The target value in this example is a value calculated by using Expression (2) described above. The processor 20 rounds off the set value of the SP shift time to the nearest integer.

(3) Compensate the Set Value

The processor 20 may compensate the set value of the SP shift time. For example, when the set value of the SP shift time is greater than the initial value, the processor 20 sets the initial value to the set value of the SP shift time. When the set value of the SP shift time is zero, the processor 20 sets one to the set value of the SP shift time.
In accordance with the set value described above, the processor 20 controls shifting the mode of the image forming apparatus 10. The processor 20 counts processes, which are performed in the ready mode, and processes (that is, returns from each of the LP mode and the SP mode), which are performed in each of the LP mode and the SP mode, during a unit control period (in this example, one week). The count of processes includes, not only the count of execution of jobs, but also the count of operations on the UI 14.

Step S12: After One Week

(1) Determine Whether Data Is Valid

The processor 20 determines whether the process count obtained in the latest week is valid according to the determination criteria described below:

{count of processes performed in ready mode in latest week + count of processes performed in LP mode in latest week (that is, count of returns from LP mode) + count of processes performed in SP mode in latest week (that is, count of returns from SP mode)} >_ 25: valid,
{count of processes performed in ready mode in latest week + count of processes performed in LP mode in latest week (that is, count of returns from LP mode) + count of processes performed in SP mode in latest week (that is, count of returns from SP mode)} < 25: invalid.

If the process count is valid, the processor 20 performs processes in step S12 (2) and its subsequent steps which are described below.
If the process count is invalid, the processor 20 discards the counts obtained in the latest week, and does not perform processes in step S12 (2) and its subsequent steps. In this case, the processor 20 sets the set value of the SP shift time, which was used in this week, to the set value for the next week, and continues the control.

(2) Calculate λ of the Cumulative Exponential Distribution Function

If it is determined that the data is valid in step S12 (1) described above, the processor 20 performs processes in step S12 (2) and its subsequent steps. According to Expression (9) described below, the processor 20 calculates λ of the cumulative exponential distribution function:

$$\lambda = \text{total process count } (R + LP + SP) \text{ in latest week/use time in latest week} \quad (9).$$

The use time in the latest week may be calculated by predetermining, for example, an average use-time (for example, eight hours per day) and multiplying the average use-time by the number of days of use, or may be calculated, for example, from the power supply time of the image forming apparatus 10.

(3) Calculate the Set Value of the SP Shift Time

Then, the processor 20 substitutes λ, which is calculated by using Expression (9) described above, and the actual value of the first ratio in the latest week into Expression (10) described below to calculate the set value of the SP shift time for the next week:

$$\text{set value of SP shift time for next week} = -\log_e(1 - \text{first ratio in latest week})/1 \quad (10).$$

The processor 20 rounds off the set value of the SP shift time to the nearest integer.

(4) A Branching Process Using the Set Value of the SP Shift Time

The processor 20 performs the process, described below, in accordance with the set value of the SP shift time for the next week which is calculated in step S12 (3):

(a) the initial value < the set value of the SP shift time: the processor 20 replaces the set value of the SP shift time for the next week by the initial value, and continues the automatic control,
(b) 1 ≤ the set value of the SP shift time < the initial value: the processor 20 adopts the calculated set value of the SP shift time for the next week, and continues the automatic control in accordance with the set value,
(c) the set value of the SP shift time = 0: the processor 20 replaces the set value of the SP shift time for the next week by one, and continues the automatic control.

If (a), (b), or (c) described above is satisfied, in the next week, the processor 20 controls shifting the mode of the image forming apparatus 10 in accordance with the calculated set value of the SP shift time for the next week.

Step S13: After Another Week

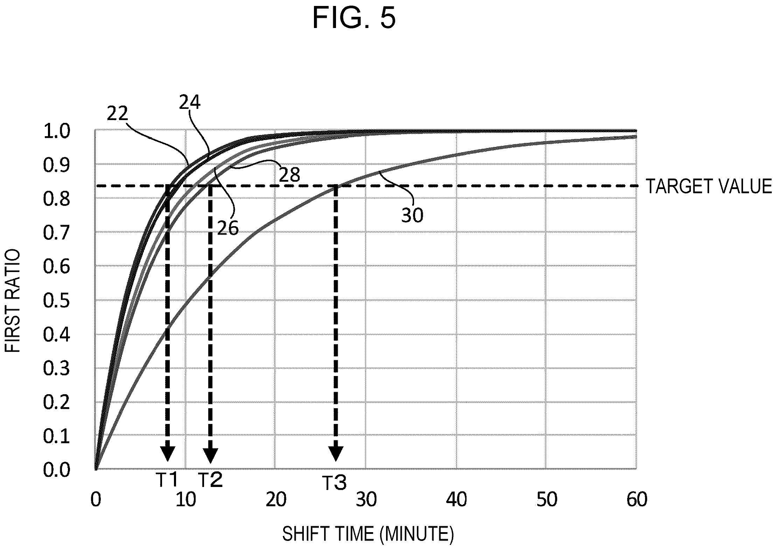

After that, the processor 20 performs the process in step S12 at the end of every week. Thus, the processor 20 repeatedly performs the process in step S12 at the end of every week.
Referring to Fig. 5, the relationship between the first ratio and the SP shift time will be described. Fig. 5 illustrates a graph showing the relationship. The horizontal axis represents the SP shift time; the vertical axis represents the actual value of the first ratio. The functions indicated by even-numbered curves 22 to 30 are calculated, for example, by using Expression (9) and Expression (10) described above.
The even-numbered curves 22 to 30 show the relationships between the first ratio and the SP shift time in different weeks. The value of λ changes depending on the way of using the image forming apparatus 10 or its operating environment. As a result, the curves have different shapes, resulting in change of the shift time corresponding to the target value.
For example, when Curve 22 is obtained from use of the image forming apparatus 10 in a certain week, the shift time corresponding to the target value of the first ratio is Shift time T1. In this case, the processor 20 sets T1 to the set value of the SP shift time, and controls shifting the mode of the image forming apparatus 10. Similarly, when Curve 28 is obtained, Shift time T2 is used as a set value. When Curve 30 is obtained, Shift time T3 is used as a set value. Thus, the set value of a shift time is changed in accordance with the way of using the image forming apparatus 10.
For example, the curve may change in accordance with the way of using the image forming apparatus 10, and the set value of a shift time may change. Specifically, the way of using the image forming apparatus 10 may change, for example, due to a busy period, consecutive holidays, or a long vacation, resulting in acquisition of a changed curve. Alternatively, the curve may change in accordance with the operating environment of the image forming apparatus 10, and the set value of a shift time may change. Specifically, a changed curve may be obtained, for example, due to business hours, business form, or the number of persons using the image forming apparatus 10. Even when the way of use or the operating environment changes, the set value of a shift time is calculated through learning, and shifting the mode of the image forming apparatus 10 is controlled in accordance with the set value.

The processor 20 may estimate the change of the environment of the image forming apparatus 10 on the basis of the change of the set value of a shift time. For example, when the difference between the set value in the latest unit control period and the set value in its immediately preceding unit control period is greater than or equal to a threshold, the processor 20 determines that the operating environment of the image forming apparatus 10 has changed. The threshold is predetermined. The threshold may be set by a user. When the difference is less than the threshold, the processor 20 determines that the operating environment of the image forming apparatus 10 has not changed.

For example, when the processor 20 determines that the operating environment of the image forming apparatus 10 has changed, the processor 20 resets the learning and performs the learning again. When the processor 20 determines that the operating environment of the image forming apparatus 10 has not changed, the processor 20 continues the automatic control.

For example, when the operating environment of the image forming apparatus 10 has changed, like Curve 30, the shape of an obtained curve is different by a large degree from the shapes of the other curves (for example, the even-numbered curves 22 to 28). Therefore, even when the target value is the same, the set value of a shift time, which is obtained from Curve 30, is different by a large degree from the set values of a shift time, which are obtained from the curves other than Curve 30 (for example, the even-numbered curves 22 to 28). That is, the difference between the set value of a shift time, which is obtained from Curve 30, and the set value of a shift time, which is obtained from a curve other than Curve 30, is greater than or equal to the threshold. Thus, through calculation of the difference between set values of a shift time, it may be determined whether the operating environment of the image forming apparatus 10 has changed.

The processor 20 may output information indicating that the operating environment of the image forming apparatus 10 has changed or information indicating that the operating environment of the image forming apparatus 10 has not changed. For example, the processor 20 may display the information on the display of the UI 14.

Concrete Examples

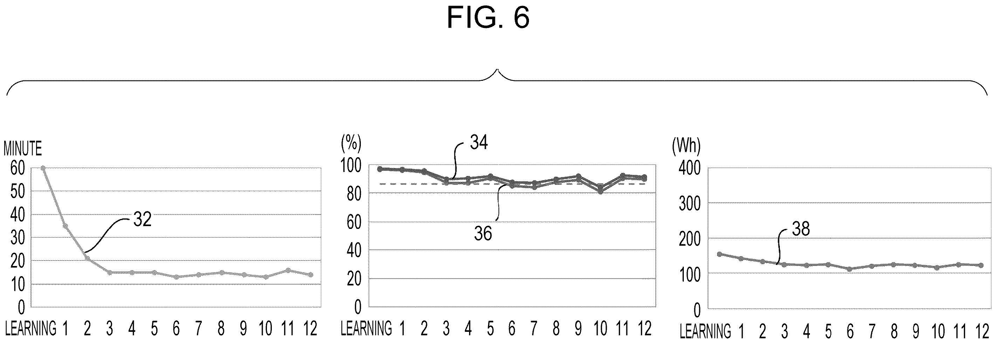

Referring to Figs. 6 to 8, the results obtained through execution of the process according to the exemplary embodiment described above will be described.

First Concrete Example

Referring to Fig. 6, a first concrete example will be described. Fig. 6 illustrates the change over time of the SP shift time, the change over time of the first and second ratios, and the change over time of the amount of power. The horizontal axis in each graph represents week. In the first concrete example, the image forming apparatus 10 is operated 40 times a day between 9:00 and 18:00.

Graph 32 illustrates the change over time of the SP shift time. Graph 34 illustrates the change over time of the first ratio. Graph 36 illustrates the change over time of the second ratio. Graph 38 illustrates the change over time of the amount of power other than the amount of power consumed in execution of jobs.

As illustrated in Fig. 6, use of the first ratio enables control of shifting the mode of the image forming apparatus 10. In addition, while the ratio is maintained at the target value, reduction of the SP shift time is achieved. For example, the SP shift time is reduced to a range between 14 minutes and 17 minutes with time. The ratio reflects convenience. As a shorter SP shift time is obtained, the mode of the image forming apparatus 10 is shifted to the SP mode at an earlier time point, achieving higher power saving. In the first concrete example, while the target convenience is maintained, power saving is improved. In addition, the amount of power other than the amount of power consumed in execution of jobs is reduced. Specifically, the amount of power is reduced by 22%.

Second Concrete Example

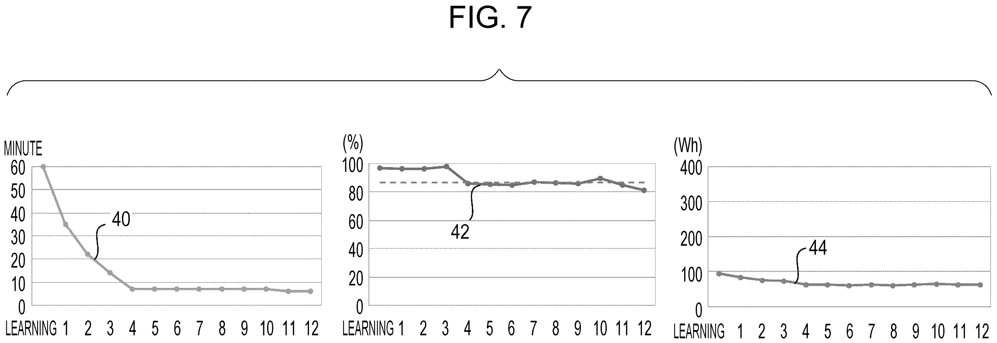

Referring to Fig. 7, a second concrete example will be described. Fig. 7 illustrates the change over time of the SP shift time (Graph 40), the change over time of the first ratio (Graph 42), and the change over time of the amount of power (Graph 44). The horizontal axis in each graph represents week. In the second concrete example, the image forming apparatus 10 is operated 40 times per day between 9:00 and 14:00. In the second concrete example, the image forming apparatus 10 is used intensively in a period shorter than that in the first concrete example.

Also in the second concrete example, substantially the same effects as those in the first concrete example are obtained. In the second concrete example, the SP shift time is reduced to a range between 7 minutes and 8 minutes. The count of processes in the first concrete example is the same as that in the second concrete example. However, in the second concrete example, the image forming apparatus 10 is used intensively in a period shorter than that in the first concrete example. This way of using the image forming apparatus 10 is reflected in the shift time, and the shift time in the second concrete example is shorter than that in the first concrete example. In addition, the amount of power is reduced by 33%.

Third Concrete Example

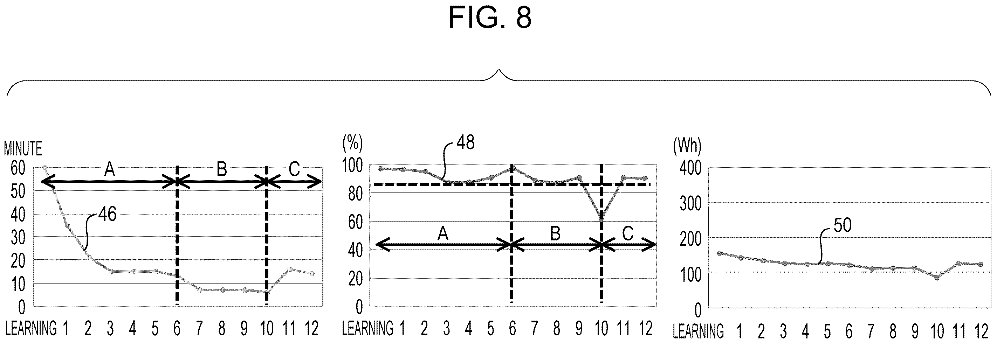

Referring to Fig. 8, a third concrete example will be described. Fig. 8 illustrates the change over time of the SP shift time (Graph 46), the change over time of the first ratio (Graph 48), and the change over time of the amount of power (Graph 50). The horizontal axis in each graph represents week.

In the third concrete example, the way of using the image forming apparatus 10 changes depending on periods. Fig. 8 illustrates Periods A, B, and C. Periods A and C are normal periods. In Period A, the image forming apparatus 10 is used 40 times per day. Period B is a busy period. In Period B, the image forming apparatus 10 is used 80 times per day.

In Period A, the SP shift time is stabilized in a range between 15 minutes and 16 minutes. In Period B, the SP shift time is reduced to a range between 7 minutes and 8 minutes. In Period C, the SP shift time is stabilized in a range between 15 minutes and 16 minutes. Thus, the SP shift time is controlled so as to follow the way of using the image forming apparatus 10. In addition, the amount of power is reduced by 26%.

First Modified Example

A first modified example will be described below.

In the exemplary embodiment described above, the first ratio or the second ratio is used as a ratio. However, these are merely exemplary ratios, and other ratios may be used. For example, a third ratio or a fourth ratio may be used:

third ratio: LP/SP,
fourth ratio: R/(R + LP + SP).

For example, the fourth ratio may be used when a long time is set to the waiting time used at a return from the LP mode. When the LP shift time is controlled without change of the SP shift time, the fourth ratio may be used.

When the ratio of the count of execution of jobs with a relatively short waiting time is relatively high, the processor 20 may calculate the ratio by using the count of execution of jobs performed through operations on the UI 14. When the ratio of the count of execution of jobs with a relatively short waiting time is relatively low, the processor 20 may calculate the ratio by using the count of execution of all jobs.

When the image forming apparatus 10 does not have the LP mode, the processor 20 may calculate the set value of the SP shift time by using a fifth ratio described below, and the processor 20 controls the SP shift time:
fifth ratio: R/(R + SP).

In the case where the image forming apparatus 10 has a fixing device, when the image forming apparatus 10 has a power-saving mode for a fuser of the fixing device, a sixth ratio described below may be used:
sixth ratio: (R + F)/(R + F + SP),
where F represents the count of returns from the power-saving mode for the fuser.

The processor 20 may calculate the ratio by using the count of execution of processes and the time intervals of execution of processes. Specifically, the processor 20 uses the count of processes, which are performed at time intervals which are each within a shift time (for example, the SP shift time), and the total count of processes to calculate a seventh ratio described below. A time interval of execution of processes is a time interval from the time point of execution of a certain process till the time of execution of the next process. Use of the seventh ratio eliminates necessity of counting processes in each mode. The total count of processes is the total count of processes performed in a learning period or in an automatic control period:

(count of processes performed at time intervals which are each within the shift time) / total count of processes.

Second Modified Example

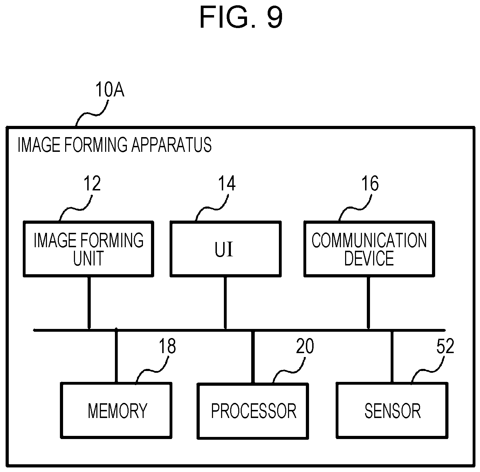

Referring to Fig. 9, a second modified example will be described. Fig. 9 is a block diagram illustrating an exemplary image forming apparatus according to the second modified example. An image forming apparatus 10A, which is an exemplary image forming apparatus according to the second modified example, includes the configuration of the image forming apparatus 10 and a sensor 52. The configuration other than the sensor 52 is the same as that of the image forming apparatus 10.

The sensor 52, which is a human detecting sensor or a camera, detects a person around the image forming apparatus 10A. For example, the sensor 52 detects a person who is present in an area in front of the image forming apparatus 10A. The human detecting sensor is, for example, an infrared sensor, an ultrasonic sensor, or a visible light sensor, but is not limited to these. When the sensor 52 is a camera, an image generated from shooting with the camera is analyzed to detect a person. For example, the analysis of an image is performed by the processor 20.

In the second modified example, assume the case in which a function (hereinafter referred to as a "shift function") of shifting the mode of the image forming apparatus 10A from a long-waiting-time mode, in which a time until execution of a process is ready is longer than that in another mode, to a short-waiting-time mode in response to the sensor 52's detection of a person in the detection area of the sensor 52 is operating in the image forming apparatus 10A. In this case, the processor 20 makes the target value lower than that in the case in which the shift function is not operating in the image forming apparatus 10A. For example, the long-waiting-time mode is the SP mode or the LP mode, and the short-waiting-time mode is the R mode.

For example, the shift function is a function of shifting the mode of the image forming apparatus 10A, which is in is the SP mode or the LP mode, from the SP mode or the LP mode to the R mode in response to the sensor 52's detection of a person in the detection area of the sensor 52.

The state in which the shift function is not operating in the image forming apparatus 10A means the state in which the image forming apparatus 10A does not have the shift function, or the state in which the shift function, which is included in the image forming apparatus 10A, is set disabled. For example, when the shift function, which is included in the image forming apparatus 10A, is set on, detection of a person in the detection area of the sensor 52 causes the mode of the image forming apparatus 10A to shift from the long-waiting-time mode to the short-waiting-time mode. When the shift function, which is included in the image forming apparatus 10A, is set off, detection of a person in the detection area of the sensor 52 does not cause the mode of the image forming apparatus 10A to shift from the long-waiting-time mode to the short-waiting-time mode.

The target value (hereinafter referred to as "target value A") in the case where the shift function is not operating in the image forming apparatus 10A is, for example, a value defined by using Expression (2) described above:

$$\text{target value A} = \text{first ratio during learning period} - \alpha \text{ (for example, } \alpha = 0.1) \quad (2).$$

The target value (hereinafter referred to as "target value B") in the case where the shift function is operating in the image forming apparatus 10A is, for example, a value defined by using Expression (11) described below:

$$\text{target value B} = \text{first ratio in learning period} - \alpha \text{ (for example, } \alpha = 0.4) \quad (11).$$

That is, the target values A and B are values obtained through calculation of subtracting the predetermined value $\alpha$ from the ratio. The value $\alpha$ (for example, "0.4" as described above) in the case where the shift function is operating in the image forming apparatus 10A is higher than the value $\alpha$ (for example, "0.1" as described above) in the case where the shift function is not operating in the image forming apparatus 10A. The values of $\alpha$ described herein are merely exemplary. Alternatively, values other than these may be used as the values of $\alpha$. In addition, the ratio may be a ratio other than the first ratio (for example, any of the second to sixth ratios).

For example, when the sensor 52 detects a user who approaches the image forming apparatus 10A, the shift function causes the mode of the image forming apparatus 10A to shift from the SP mode or the LP mode to the R mode. Thus, while the user is approaching the image forming apparatus 10A, a shift to the R mode is being performed. This shortens the time, in which the user waits in front of the image forming apparatus 10A (that is, the user waits until completion of the shift to the R mode), compared with the case in which the shift function does not operate. Therefore, even if the SP shift time is set short, the user convenience is not reduced, and both convenience and power saving may be achieved. However, even in the image forming apparatus 10A in which the shift function operates, if the SP shift time is set long, such power-saving effect fails to be obtained.

Therefore, in the second modified example, the target value B, which is lower than the target value A used when the shift function is not operating, is used as a target value used when the shift function is operating. This achieves both convenience and power saving.

For example, when the shift function is not operating, a job, for which a user has to wait in front of the image forming apparatus 10A, may occur. Specifically, when a user operates the image forming apparatus 10A which is in the SP mode, the user has to wait in front of the image forming apparatus 10A. When the shift function is operating, a shift to the R mode is being performed while the user is approaching the image forming apparatus 10A. Therefore, when the user arrives at the image forming apparatus 10A, a shift to the R mode has been completed, or the user's waiting time in front of the image forming apparatus 10A is shortened. The job in this case is a job with no waiting time or a job with a short waiting time. Therefore, even when a job to be executed is a job executed after a return of the mode from the SP mode to the R mode, a user's waiting time may not occur or the waiting time may be short. This may conclude that the convenience in the case where the shift function is operating is higher than that in the case where the shift function is not operating. Therefore, in the case where the shift function is operating, if the target value is set lower than that in the case where the shift function is not operating, actual user convenience may not be reduced. In addition, the target value, which is set lower, causes the power-saving effect to be made higher. Therefore, use of the target value B in the case where the shift function is operating achieves both convenience and power saving.

The higher the value $\alpha$ is, the higher the power-saving effect is. If the value $\alpha$ is too high, the reset described above may occur unnecessarily. For example, the value $\alpha$, which is set between 0.1 and 0.4, causes the possibility of occurrence of unnecessary reset to be decreased. As a matter of course, this value is merely exemplary, and may be changed, for example, depending on the performance or the operating environment of the image forming apparatus 10 A.

For example, when the initial set value of the SP shift time is 50 minutes, the value $\alpha$ is set to 0.4; when the initial set value is 30 minutes, the value $\alpha$ is set to 0.3; when the initial set value is 10 minutes, the value is set to 0.1. Such setting enables the power-saving effect to be made higher with avoidance of occurrence of unnecessary reset. These values are merely exemplary, and may be changed, for example, depending on the performance or the operating environment of the image forming apparatus 10A.

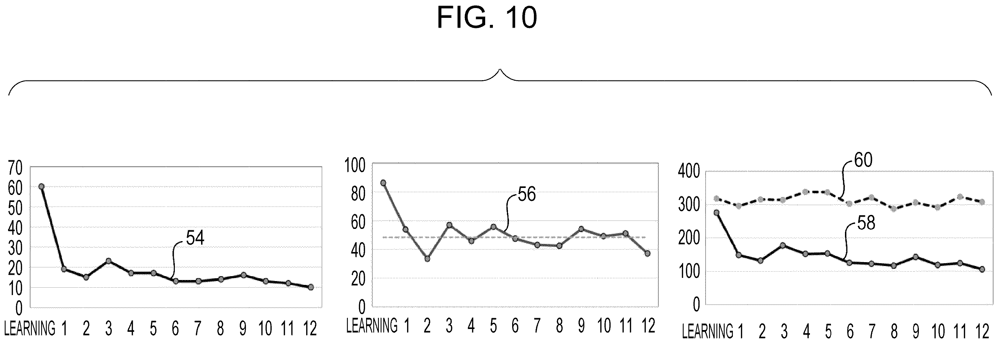

Fig. 10 illustrates the changes over time of the SP shift time and the like according to the second modified example. Graph 54 illustrates the change over time of the SP shift time according to the second modified example. Graph 56 illustrates the change over time of the first ratio according to the second modified example. Graph 58 illustrates the change over time of the amount of power according to the second modified example. Graph 60 illustrates the change over time of the amount of power in the case where the target value is constant. The horizontal axis of each graph represents week.

As illustrated in Graph 54, the SP shift time is set short with time. As illustrated in Graph 56, the first ratio changes less with time. As illustrated in Graphs 58 and 60, the second modified example achieves a reduction of the amount of power. For example, the second modified example causes the power reduction ratio to increase by 32% compared with the case in which the target value A continues to be used as the target value.

In the exemplary embodiment and the first and second modified examples described above, the count of processes performed in each mode may be the count of operations on the UI 14 in each mode. Each of R, LP, and SP described above is the count of operations on the UI 14. The processor 20 calculates a ratio (for example, the first to seventh ratios) on the basis of the count of operations on the UI 14 in each mode. Typically, when a user operates the UI 14, the user goes to the image forming apparatus 10 or the image forming apparatus 10A and operates the UI 14. Calculation of the ratio based on the count of operations on the UI 14 means calculation of the ratio in consideration of convenience under the condition in which users, who are actually present at the image forming apparatus 10 or the image forming apparatus 10A, operate the image forming apparatus 10 or the image forming apparatus 10A. As a result, the set value of the shift time is calculated in consideration of convenience under such a condition.

When the count of operations on the UI 14 is less than or equal to a threshold, the processor 20 may calculate a ratio, such as the first to seventh ratios, on the basis of the count including the count of processes (for example, jobs) other than operations on the UI 14. The threshold is a predetermined value. The threshold may be set by a user. For example, when the count of operations on the UI 14 is less than or equal to the threshold, the processor 20 calculates a ratio on the basis of the total of the count of execution of all jobs and the count of operations on the UI 14. That is, each of R, LP, and SP described above is the total of the count of execution of all jobs and the count of operations on the UI 14, and the processor 20 calculates the ratio on the basis of the total in each mode.

Some functions of the image forming apparatus 10 may be implemented by another apparatus other than the image forming apparatus 10. When some functions of the image forming apparatus 10 are implemented by another apparatus other than the image forming apparatus 10, the image forming apparatus 10 and the other apparatus may be included in an information processing system. That is, the functions of the image forming apparatus 10 may be implemented in a single apparatus, or may be implemented in the information processing system including multiple apparatuses. Similarly, in the image forming apparatus 10A, some functions of the image forming apparatus 10A may be implemented by a different apparatus other than the image forming apparatus 10A.

For example, each function of the image forming apparatuses 10 and 10A is implemented in cooperation with hardware and software. For example, the processor 20 of the image forming apparatuses 10 and 10A reads, for execution, programs stored in a memory. Thus, each function of the image forming apparatuses 10 and 10A is implemented. The programs are stored in a memory through a recording medium, such as a compact disc (CD) or a digital versatile disc (DVD), or through a communication path such as a network.

In the exemplary embodiment and the modified examples described above, control of the mode of the image forming apparatuses 10 and 10A is described. The processes according to the exemplary embodiment and the modified examples may be applied to an apparatus other than the image forming apparatuses 10 and 10A. That is, an apparatus according to the exemplary embodiment and the modified examples may be other than the image forming apparatuses 10 and 10A if the apparatus has multiple modes having different times elapsing until execution of a process is ready.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

Appendix

(((1))) An information processing system comprising:
a processor configured to:
output a set value of a shift time on a basis of a history of processes performed by an apparatus and a target value of a ratio of a specific process performed by the apparatus, the apparatus having a plurality of modes having different times elapsing until execution of a process is ready, the history including a count of processes performed in each of at least two modes among the plurality of modes, the shift time being a time until the apparatus is shifted to a mode, among the plurality of modes, in which a time until execution of a process is ready is longer than in another mode.
(((2))) The information processing system according to (((1))),
wherein the history includes a ratio related to counts of processes performed in the respective at least two modes.
(((3))) The information processing system according to (((2))),

wherein the at least two modes include a first mode, a second mode, and a third mode,
wherein the first mode is a mode in which the apparatus waits for execution of a process,
wherein the second mode is a mode in which a time until execution of a process is ready is longer than in the first mode,
wherein the third mode is a mode in which a time until execution of a process is ready is longer than in the second mode, and
wherein the history includes a ratio calculated by using a count of processes performed in the first mode, a count of processes performed in the second mode, and a count of processes performed in the third mode.

(((4))) The information processing system according to (((2))),

wherein the at least two modes include a first mode and a second mode,
wherein the first mode is a mode in which the apparatus waits for execution of a process,
wherein the second mode is a mode in which a time until execution of a process is ready is longer than in the first mode, and
wherein the history includes a ratio calculated by using a count of processes performed in the first mode and a count of processes performed in the second mode.

(((5))) The information processing system according to (((2))),

wherein the at least two modes include a first mode, a second mode, and a third mode,
wherein the first mode is a mode in which the apparatus waits for execution of a process,
wherein the second mode is a mode in which a time until execution of a process is ready is longer than in the first mode,
wherein the third mode is a mode in which a time until execution of a process is ready is longer than in the second mode, and
wherein the history includes a ratio calculated by using a count of processes performed in the second mode and a count of processes performed in the third mode.

(((6))) The information processing system according to (((2))),
wherein the history includes a ratio calculated by using a total count of processes and a count of processes performed at time intervals, each of the time intervals being within the shift time.

(((7))) The information processing system according to (((1))),
wherein the counts of processes performed in the respective at least two modes are counts, in the respective at least two modes, of operations on a user interface included in the apparatus.
(((8))) The information processing system according to (((7))),
wherein, when a count of operations on the user interface is less than or equal to a threshold, the counts of processes performed in the respective at least two modes include counts of processes other than the operations on the user interface.
(((9))) The information processing system according to (((1))),
wherein the processor is configured to:
by using a cumulative exponential distribution function, calculate the set value of the shift time from the history and the target value.
(((10))) The information processing system according to (((1))),

wherein the history includes a count of processes in each predetermined unit period,
wherein the processor is configured to:

based on the history and the target value, the history including a count of processes during a first unit period, output the set value of the shift time for a next second unit period of the first unit period; and,
when the count of processes during the first unit period is less than a threshold, output the set value of the shift time in the first unit period as the set value of the shift time in the second unit period.

(((11))) The information processing system according to (((1))),
wherein the processor is configured to:
based on a change of the set value of the shift time, estimate a change of an operating environment of the apparatus.
(((12))) The information processing system according to (((1))),
wherein, when a function is operating in the apparatus, the processor makes the target value lower compared with a case in which the function is not operating in the apparatus, the function being such that, in response to detection of a person around the apparatus, the mode of the apparatus is shifted from a long-waiting-time mode to a short-waiting-time mode, the long-waiting-time mode being a mode which is among the plurality of modes and in which a time until execution of a process is ready is longer than another mode.
(((13))) The information processing system according to (((12))),

wherein the target value is obtained through calculation of subtracting a predetermined value from the ratio, and
wherein the predetermined value used when the function is operating in the apparatus is higher than the predetermined value used when the function is not operating in the apparatus.

(((14))) A program causing a computer to execute a process comprising:
outputting a set value of a shift time on a basis of a history of processes performed by an apparatus and a target value of a ratio of a specific process performed by the apparatus, the apparatus having a plurality of modes having different times elapsing until execution of a process is ready, the history including a count of processes performed in each of at least two modes among the plurality of modes, the shift time being a time until the apparatus is shifted to a mode, among the plurality of modes, in which a time until execution of a process is ready is longer than in another mode.
(((15))) An information processing method causing a processor to execute a process comprising:
outputting a set value of a shift time on a basis of a history of processes performed by an apparatus and a target value of a ratio of a specific process performed by the apparatus, the apparatus having a plurality of modes having different times elapsing until execution of a process is ready, the history including a count of processes performed in each of at least two modes among the plurality of modes, the shift time being a time until the apparatus is shifted to a mode, among the plurality of modes, in which a time until execution of a process is ready is longer than in another mode.

The information processing systems according to (((1))), (((2))), (((3))), and (((4))), the program according to (((14))), and the information processing method according to (((15))) achieve suppression of reduction of the power-saving effect compared with the case in which an apparatus has a constant shift time elapsing until a shift to a mode, among multiple modes, in which a time until execution of a process is ready is longer than that in another mode.
The information processing system according to (((5))) enables the set value of the shift time to be output without use of the count of processes performed in the first mode.
The information processing system according to (((6))) enables the set value of the shift time to be output without counting execution of processes in each mode.
The information processing system according to (((7))) enables the set value of the shift time to be output on the basis of a history of operations on the user interface.

The information processing system according to (((8))) enables the set value of the shift time to be output even when the count of operations on the user interface is less than or equal to the threshold.

The information processing system according to (((9))) enables the set value of the shift time to be calculated by using the cumulative exponential distribution function.

The information processing system according to (((10))) enables shifting the mode to be controlled by using the same set value even when data about the count of processes, which is greater than or equal to the threshold, fails to be collected.

The information processing system according to (((11))) enables change of the operating environment of the apparatus to be estimated by using the set value of the shift time.

The information processing systems according to (((12))) and (((13))) achieve improvement of the power-saving effect compared with the case in which the target value is not changed depending on whether the function is operating.

**Claims**

1. An information processing system comprising:
   a processor configured to:
   output a set value of a shift time on a basis of a history of processes performed by an apparatus and a target value of a ratio of a specific process performed by the apparatus, the apparatus having a plurality of modes having different times elapsing until execution of a process is ready, the history including a count of processes performed in each of at least two modes among the plurality of modes, the shift time being a time until the apparatus is shifted to a mode, among the plurality of modes, in which a time until execution of a process is ready is longer than in another mode.

2. The information processing system according to claim 1,
   wherein the history includes a ratio related to counts of processes performed in the respective at least two modes.

3. The information processing system according to claim 2,

   wherein the at least two modes include a first mode, a second mode, and a third mode,
   wherein the first mode is a mode in which the apparatus waits for execution of a process,
   wherein the second mode is a mode in which a time until execution of a process is ready is longer than in the first mode,
   wherein the third mode is a mode in which a time until execution of a process is ready is longer than in the second mode, and
   wherein the history includes a ratio calculated by using a count of processes performed in the first mode, a count of processes performed in the second mode, and a count of processes performed in the third mode.

4. The information processing system according to claim 2,

   wherein the at least two modes include a first mode and a second mode,
   wherein the first mode is a mode in which the apparatus waits for execution of a process,
   wherein the second mode is a mode in which a time until execution of a process is ready is longer than in the first mode, and
   wherein the history includes a ratio calculated by using a count of processes performed in the first mode and a count of processes performed in the second mode.

5. The information processing system according to claim 2,

   wherein the at least two modes include a first mode, a second mode, and a third mode,
   wherein the first mode is a mode in which the apparatus waits for execution of a process,
   wherein the second mode is a mode in which a time until execution of a process is ready is longer than in the first mode,
   wherein the third mode is a mode in which a time until execution of a process is ready is longer than in the second mode, and
   wherein the history includes a ratio calculated by using a count of processes performed in the second mode and a count of processes performed in the third mode.

**6.** The information processing system according to claim 2,
wherein the history includes a ratio calculated by using a total count of processes and a count of processes performed at time intervals, each of the time intervals being within the shift time.

**7.** The information processing system according to claim 1,
wherein the counts of processes performed in the respective at least two modes are counts, in the respective at least two modes, of operations on a user interface included in the apparatus.

**8.** The information processing system according to claim 7,
wherein, when a count of operations on the user interface is less than or equal to a threshold, the counts of processes performed in the respective at least two modes include counts of processes other than the operations on the user interface.

**9.** The information processing system according to claim 1,
wherein the processor is configured to:
by using a cumulative exponential distribution function, calculate the set value of the shift time from the history and the target value.

**10.** The information processing system according to claim 1,

wherein the history includes a count of processes in each predetermined unit period,
wherein the processor is configured to:

based on the history and the target value, the history including a count of processes during a first unit period, output the set value of the shift time for a next second unit period of the first unit period; and,
when the count of processes during the first unit period is less than a threshold, output the set value of the shift time in the first unit period as the set value of the shift time in the second unit period.

**11.** The information processing system according to claim 1,
wherein the processor is configured to:
based on a change of the set value of the shift time, estimate a change of an operating environment of the apparatus.

**12.** The information processing system according to claim 1,
wherein, when a function is operating in the apparatus, the processor makes the target value lower compared with a case in which the function is not operating in the apparatus, the function being such that, in response to detection of a person around the apparatus, the mode of the apparatus is shifted from a long-waiting-time mode to a short-waiting-time mode, the long-waiting-time mode being a mode which is among the plurality of modes and in which a time until execution of a process is ready is longer than another mode.

**13.** The information processing system according to claim 12,

wherein the target value is obtained through calculation of subtracting a predetermined value from the ratio, and
wherein the predetermined value used when the function is operating in the apparatus is higher than the predetermined value used when the function is not operating in the apparatus.

**14.** A program causing a computer to execute a process comprising:
outputting a set value of a shift time on a basis of a history of processes performed by an apparatus and a target value of a ratio of a specific process performed by the apparatus, the apparatus having a plurality of modes having different times elapsing until execution of a process is ready, the history including a count of processes performed in each of at least two modes among the plurality of modes, the shift time being a time until the apparatus is shifted to a mode, among the plurality of modes, in which a time until execution of a process is ready is longer than in another mode.

**15.** An information processing method causing a processor to execute a process comprising:
outputting a set value of a shift time on a basis of a history of processes performed by an apparatus and a target value of a ratio of a specific process performed by the apparatus, the apparatus having a plurality of modes having different times elapsing until execution of a process is ready, the history including a count of processes performed in each of at least two modes among the plurality of modes, the shift time being a time until the apparatus is shifted to a mode, among the plurality of modes, in which a time until execution of a process is ready is longer than in another mode.

# FIG. 1

**10**

IMAGE FORMING APPARATUS

**12**

IMAGE FORMING UNIT

**14**

UI

**16**

COMMUNICATION DEVICE

**18**

MEMORY

**20**

PROCESSOR

# FIG. 2

EP 4 485 140 A1

# FIG. 3

# FIG. 4

CUMULATIVE PROBABILITY OF OCCURRENCE

TIME UNTIL NEXT USE OF IMAGE
FORMING APPARATUS (MINUTE)

# FIG. 5

FIG. 6

FIG. 7

# FIG. 8

# FIG. 9

10A

**IMAGE FORMING APPARATUS**

| 12 | 14 | 16 |
|---|---|---|
| IMAGE FORMING UNIT | UI | COMMUNICATION DEVICE |

| 18 | 20 | 52 |
|---|---|---|
| MEMORY | PROCESSOR | SENSOR |

FIG. 10

EP 4 485 140 A1

| Europäisches Patentamt European Patent Office Office européen des brevets | **EUROPEAN SEARCH REPORT** | Application Number EP 24 18 0674 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/082121 A1 (XEROX CORP [US]; DANCE CHRISTOPHER R [FR] ET AL.) 21 June 2012 (2012-06-21) * paragraphs [0003] - [0006], [0013] - [0064]; figures 1-4 * ----- | 1-15 | INV. G06F1/3215 G06F1/3234 G06F1/3287 G06F1/329 |

**TECHNICAL FIELDS SEARCHED (IPC)**

G06F
H04N

The present search report has been drawn up for all claims

| Place of search | Date of completion of the search | Examiner |
|---|---|---|
| The Hague | 6 November 2024 | Arranz, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 0674

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | Publication date | Patent family member(s) | Publication date |
|---|---|---|---|
| WO 2012082121 A1 | 21-06-2012 | AU 2010365378 A1 | 18-07-2013 |
| | | CN 103354918 A | 16-10-2013 |
| | | GB 2501194 A | 16-10-2013 |
| | | JP 5734454 B2 | 17-06-2015 |
| | | JP 2014502929 A | 06-02-2014 |
| | | KR 20140043301 A | 09-04-2014 |
| | | WO 2012082121 A1 | 21-06-2012 |

EPO FORM P0459

For more details about this annex : see Official Journal of the European Patent Office, No. 12/82

**EP 4 485 140 A1**

**Patent documents cited in the description**

- JP 2014502929 A